# EUROPÄISCHE PATENTSCHRIFT

(11) **EP 0 417 228 B1**
(45) Veröffentlichungstag und Bekanntmachung des Hinweises auf die Patenterteilung: **14.09.1994**
(21) Anmeldenummer: 90904331.7
(22) Anmeldetag: 05.03.1990
(51) Int. Cl.: H02G 1/12

(54) **ABISOLIERZANGE**
WIRE STRIPPER
PINCE A DENUDER

(30) Priorität: 04.03.1989 DE 8902643 U; 05.07.1989 DE 3922016
(43) Veröffentlichungstag der Anmeldung: 20.03.1991
(73) Patentinhaber: Krampe, Franz, D-59387 Ascheberg (DE)
(72) Erfinder: Krampe, Franz, D-59387 Ascheberg (DE)
(74) Vertreter: Hoffmeister, Helmut, Dr. Dipl.-Phys.
(86) Internationale Anmeldenummer: EP9000323
(87) Internationale Veröffentlichungsnummer: WO9010329

(56) Entgegenhaltungen:
- GB-A- 2 060 467
- GB-A- 2 129 360

## Beschreibung

Die Erfindung betrifft eine Abisolierzange.

Aus der **DE-C** **32** **41** **530** ist eine Abisolierzange gemäß Oberbegriff bekannt. Um den Vergleich mit dem Stand der Technik zu vereinfachen, entsprechen die im Oberbegriff des beigefügten Anspruches genannten Bezugszahlen analogen Teilen des vorzitierten Standes der Technik. Bei der bekannten Abisolierzange ist der eine Schenkel 3 in einer Aussparung im Mittelteil des anderen Schenkels 2 geführt und gelagert, wobei als gemeinsamer Dreh- und Verschiebepunkt für beide Schenkel 2, 3 ein in Langlöchern der Schenkel lose gelagerter Zylinderbolzen 14 vorgesehen ist. Mit ihm erfolgt die Bewegung der Schenkel 2, 3 gegeneinander und gegenüber dem Zylinderbolzen 14 über eine mehrstufig wirkende Spreizfeder derart, daß stufenweise die Greiferbacken aufeinandergepreßt und die Schneiden in Schneidstellung gebracht werden. Anschliessend wird die Schneide des verschiebbaren Schenkels m i t d i e s e m zum Abziehen der Isolierung zurückgezogen.

Die bekannte Abisolierzange nach Patent 32 41 530 ist in zahlreichen Exemplaren gebaut worden und hat sich im großen und ganzen auch bewährt. Als nachteilig wird empfunden, daß die Zangenschenkel gegeneinander beim Aufeinanderdrücken nicht nur eine Drehbewegung, sondern auch eine translatorische Bewegung ausführen. Dies erschwert das feinfühlige Arbeiten mit der bekannten Zange, da sie in der Hand des Benutzers eine ungewohnte Bewegung ausführt. Außerdem läßt sich konstruktiv ein Saitenschneider schwer so unterbringen, daß er gut zugänglich ist.

Es stellt sich demnach die Aufgabe, eine Abisolierzange neu zu konzipieren, die ein feinfühliges Arbeiten ermöglicht und die es auch erlaubt, den Saitenschneider zwischen den Backen leicht zugänglich unterzubringen.

Diese Aufgabe wird gelöst durch eine Abisolierzange, die die Merkmale des Anspruches 1 besitzt.

Im Gegensatz zu der Abisolierzange nach dem Stand der Technik wird im vorliegenden Fall ein Mitnehmerhebel verwendet, der an einem gegenüber der oberen Greiferbacke beweglichen Abisolierschneiden-Träger zieht und diesen in eine Abstreifstellung bringt.

Zwar ist bereits bekannt, einen solchen "Mitnehmer" für beide Abisolierschneiden-Träger zu verwenden (vgl. DE-A 24 02 187), jedoch ist hierbei ein relativ kompliziertes Zusammenwirken zwischen vielen Einzelteilen vorzusehen.

Bekannt ist weiterhin eine Abisolierzange (DE-A 33 08 053), die mit mehreren Federn arbeitet und bei der ein Übertragungshebel vorhanden ist, der mit einem Ende zu einer Verlängerung der zweiten Klemmbacke führt. Der Übertragungshebel ist jedoch nicht mit der Spreizfeder verknüpft, sondern steht mit Zugfedern in Verbindung. Diese Lösung ist daher relativ kompliziert und nicht als Vorbild für die hier vorliegende Zange zu werten.

Aus GB-A-20 60 457 ist eine Abisolierzange gemäß dem Oberbegriff des Anspruches 1 bekannt, bei der ein dem erfindungsgemäßen Mitnehmerhebel 16 entsprechender Verbindungsstab vorhanden ist. Einen Endes ist dieser Verbindungsstab drehbeweglich an dem unteren Griffteil 3 der Zange an einem gegenüber dem ersten Drehpunkt versetzten Drehpunkt angelenkt und andererseits in einer Langlochführung 36 eines am oberen Schenkel 2 angeordneten Führungsteils geführt und mit einem verschiebbaren Abisolierelement gelenkbeweglich in einem Gelenk 22 verbunden. Bei dieser Abisolierzange sind jedoch für die Führung des Abisolierelementes zwei Führungen erforderlich. Das Rückholen des Verbindungsstabes erfolgt über eine Spreizfeder, das Auseinanderdrücken der Greiferbacken durch eine andere Spreizfeder. Auch ist hier eine Anordnung des Verbindungsstabes außerhalb des Verbindungsbereiches der beiden Schenkel 2, 3 zwischen den Handgriffen 4, 5 vorgesehen.

Der Mitnehmerhebel ist so gestaltet, daß er mit dem einen Arm der Spreizfeder zusammenwirkt, wobei durch entsprechende Verdickung der Auflagefläche für die Spreizfeder außerhalb einer Verbindungslinie L zwischen dem ersten und dem zweiten Drehpunkt erreicht wird, daß der Mitnehmer mit seinem Gelenk, das den Abisolierschneidenträger hält, in Richtung Greiferbacken ein Drehmoment erfährt.

In den Ansprüchen und in der nachfolgenden Beschreibung sind Begriffe wie "oben","unten", "vorne", hinten" verwendet. Diese Begriffsbestimmungen beziehen sich auf die dargestellte Ausführungsform, was "oben" und "unten" betrifft. Vorne sind die Greiferbacken angeordnet, während hinten die Griffe zu finden sind. Soweit dem Fachmann geläufig, können kooperierende Teile mutatis mutandis auch jeweils anderen Teilen zugeordnet werden, beispielsweise Schneiden den entsprechenden Schneidenträgern usw.. Zur Erleichterung des sprachlichen Verständnisses sind kinematische Umkehrungen daher nicht immer im allgemeinen Wortlaut umfaßt.

Die Merkmale der Unteransprüche werden in der nachfolgenden Beschreibung eines Ausführungsbeispieles erläutert. Das Ausführungsbeispiel ist in drei Figuren dargestellt, welche zeigen:
- Figur 1: eine Abisolierzange in einer offenen Stellung;
- Figur 2: zeigt die Abisolierzange in einer geschlossenen Stellung während des Einschneidens;
- Figur 3: zeigt die Abisolierzange beim Abziehen eines abgeschnittenen Kabelstücks.

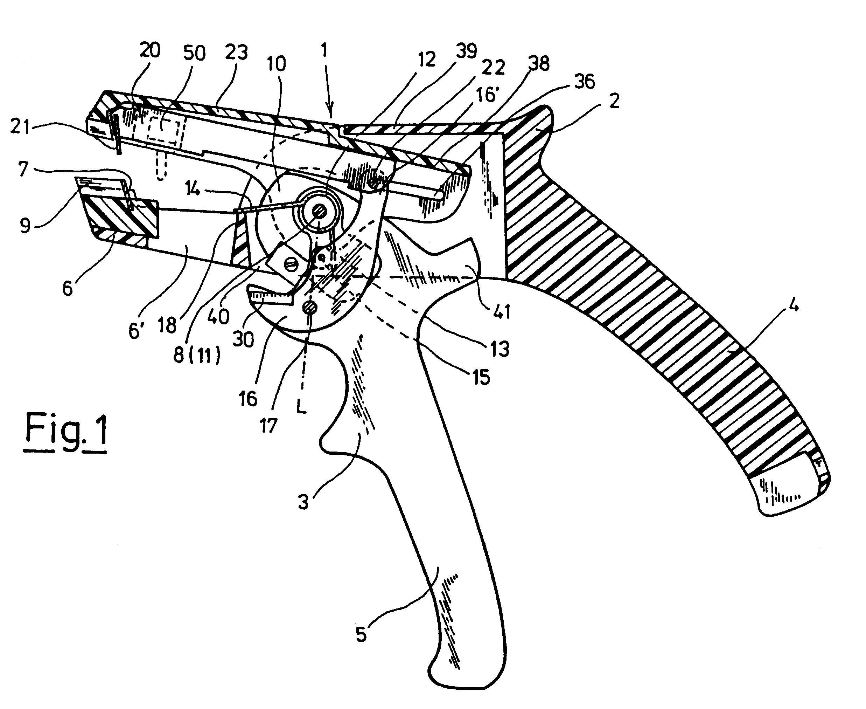

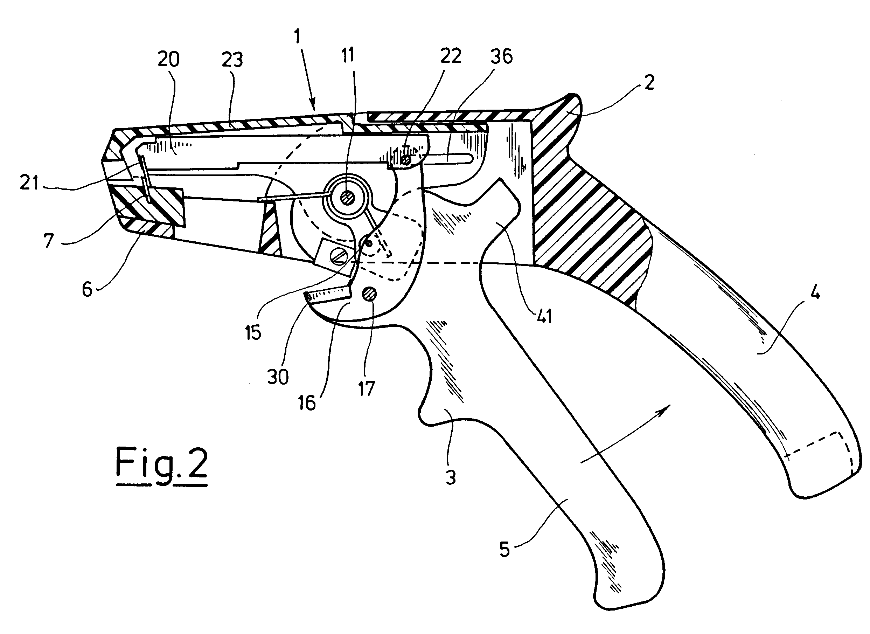

Die in den Figuren 1 bis 3 dargestellte Abisolierzange 1 besteht im wesentlichen aus zwei Zangenschenkeln 2 und 3, die einenendes jeweils in einen Griff 4 bzw. 5 auslaufen. Der obere Zangenschenkel 2 mit Griff 4 ist starr und einstückig mit einer unteren Greiferbacke 6 über ein Verbindungsstück 6′ verbunden. Am vorderen Ende der Greiferbacke 6 befindet sich das untere Anlagemesser 7, das mit der Greiferbacke 6 fest verbunden ist. Vor dem Anlagemesser 7 befindet sich noch ein Einlegekanal 9, in den das Kabelende (nicht dargestellt) einlegbar ist.

Die Handgriffe und Teile der Zange sind innen hohl und zum Teil doppelwandig ausgeführt, so daß in den sich ergebenden Zwischenräumen die weiteren beschriebenen Teile untergebracht werden können.

Die beiden Zangenschenkel 2 und 3 kreuzen sich und sind in einem ersten Drehpunkt 8 miteinander verbunden. Der untere Zangenschenkel 3 besteht aus dem Griff 5 und einem abgerundeten Mittelteil 10, wobei das Mittelteil 10 auch einen zum Drehpunkt 8 gehörenden Drehzapfen 11 trägt. Um den Drehzapfen 11 ist eine unter Spannung stehende Spreizfeder 12 gelegt, die in zwei Spreizarme 13 und 14 ausläuft. Der eine (vordere) Spreizarm 14 drückt auf ein Auflager 18, das mit dem Verbindungsstück 6′ des oberen Zangenschenkels 2 verbunden ist, während der andere Spreizarm 13 auf einen verdickten Auflagezapfen 15 drückt, der auf einem Mitnehmerhebel 16 sitzt.

Ein wesentlicher Teil der Abisolierzange 1 ist der Mitnehmerhebel 16, der hinter dem ersten Drehpunkt 8 angeordnet ist und der mehrere Funktionen erfüllt. Der Mitnehmerhebel 16 hat eine etwa halbmondförmige Gestalt und reicht über das Mittelteil 10 mit seinem oberen Ende 16′ bis etwa zur Mitte des oberen Zangenschenkels 2. Der Mitnehmerhebel 16 ist an einem an dem Mittelteil 10 des Zangenschenkels 3 angebrachten zweiten Drehpunkt 17 begrenzt drehbar gelagert. Der Mitnehmerhebel 16 dient auch dazu, die Spreizkraft der Spreizfeder 12 auf den unteren Zangenhebel 3 zu übertragen. Darüber hinaus ist die äußere Peripherie des Auflagezapfens 15 außerhalb (hinter) der Verbindungslinie L zwischen dem ersten und zweiten Drehpunkt 8 bzw. 17 angeordnet. Dadurch wird der Zangenschenkel 3 gegen den anderen Schenkel 2 gespreizt und gleichzeitig der Mitnehmerhebel 16 nach vorne, d. h. in Richtung der Greifbacke 6 gedrückt.

Das für die Greifbacke 6 erforderliche Gegenelement bildet eine obere Greifbacke 23, die drehbar gegenüber den Teilen 10 und 12 am Gelenk 8 angelenkt ist. Die Greifbacke 23 ist ein isoliertes Teil, das an seinem hinteren Ende einen obenliegenden Führungssteg 38 aufweist, der gegen eine entsprechende Unterseite 39 des Zangenschenkels 2 anliegt, wenn die Zange geschlossen ist. Bei offenen Zangenschenkeln kann die obere Greifbacke 23 gegenüber dem Zangenschenkel 2 eine beschränkte Drehbewegung ausführen.

Ferner ist die Greifbacke 23 mit einer im wesentlichen waagerecht liegenden Langlochführung 36 ausgerüstet, in der ein Zapfen 22 geführt ist, der wiederum am oberen, im Bereich des oberen Zangenschenkels 2 bzw. der Greifbacke 23 liegenden Ende des Mitnehmerhebels 16 angebracht ist und mit dem hinteren Ende eines Abisolierschneiden-Trägers 20 verbunden ist. Diese Gelenkverbindung durch den Zapfen 22, der wiederum in der Führung 36 beweglich ist, ermöglicht die horizontale Bewegung des Abisolierschneiden-Trägers 20. Durch die Verschiebung des Zapfens 22 in der Führung 36 wird der Abisolierschneiden-Träger 20 (in der Zeichnung) nach rechts verschoben, wenn die Schenkel sich schließen, da der Träger 20 mit dem Mitnehmerhebel 16 einenendes verbunden ist. Das Mitnehmen erfolgt bis zum Schließanschlag der Schenkel. Damit wird ein angeschnittenes Kabelmantelstück abgezogen.

Das obere, im Bereich des oberen Zangenschenkels 2 bzw. der Greifbacke 23 liegende Ende des Mitnehmerhebels 16 ist mit einem Ende eines Abisolierschneiden-Trägers 20 verbunden. Diese Gelenkverbindung wird hergestellt durch einen Zapfen 22, der wiederum in einer Führung 36 beweglich ist, die als Langloch ausgebildet ist und sich in der oberen Greifbacke 23 befindet. Demnach wird die Bewegung des Mitnehmerhebels 16 durch die Bewegung des Zapfens in der Führung 36 begrenzt. Gleichzeitig kann der Zapfen an seinem vorderen und hinteren Anschlag innerhalb der Führung 36 die Greifbacke 23 nach vorne oder hinten mitnehmen.

Der gegenüber der oberen Greifbacke 23 beweglich geführte Abisolierschneiden-Träger 20 wiederum trägt an seinem vorderen Ende die zu der Schneide 7 kompatible Abisolierschneide 21. Die Schneiden 7 und 21 sind so angeordnet, daß sie bei Aufeinanderdrücken der Handgriffe 4 und 5 einen dazwischenliegenden Kabelmantel anritzen, einschneiden und abziehbar machen. Dazu sind die Schneiden 7 und 21 V-förmig gestaltet, d. h. zueinander kompatibel. Der Isolierschneiden-Träger 20 ist ferner mit einem verstellbaren, schlittenartigen Anschlag-Längensteller 50 ausgestattet (Figur 1 gestrichelt), der mit dem Abisolierschneiden-Träger 20 verschieb- und feststellbar verbunden ist. Mit ihm kann eine Anschlagtiefe für das einzuschiebende Kabelende festgelegt werden.

Weiterhin ist der Mitnehmerhebel 16 in seinem unteren Bereich zusammen mit einem entsprechend ausgeformten Bereich des Zangenschenkels 2 als Saitenschneider ausgebildet. Ein Teil des Mitnehmerhebels 16 ist als Schneide 30 ausgeführt, die mit einer an dem Zangenschenkel 2 angebrachten Gegenschneide 40 kooperiert. Die aufeinanderfahrenden Schneiden 30 und 40 begrenzen gleichzeitig die Schließbewegung der beiden Zangenschenkel 2 und 3, wenn sie aufeinandertreffen.

### Funktionsbeschreibung

Wenn gemäß Figur 1 die Abisolierzange 1 offen ist, befinden sich die beiden Schneiden 7 und 21 in ihrer vorderen Stellung. Dabei ist die Schneide 7 fest mit der Greifbacke 6 verbunden, während die obere Schneide 21 zwar mit dem Träger 20 fest, jedoch mit der oberen Greifbacke 23 beweglich verbunden ist.

Nunmehr wird ein Kabelende bis zur Stirnseite des Anschlag-Längenstellers 50 eingeschoben. Beim Schließen der Griffe 4, 6 gegen die Kraft der Feder 12 bewegen sich die beiden Backen 6 und 23 aufeinander zu, so daß die Messer 7 und 21 gegeneinander schließen und den Kabelmantel des dazwischenliegenden Kabels fest umfassen und einschneiden bzw. ritzen. Wenn die beiden Backen 6 und 23 fest aufeinandergedrückt sind, können die beiden Handgriffe jedoch noch weiter aufeinander zubewegt werden.

Dazu ist das obere Ende des Mitnehmerhebels 16 mit dem Zapfen 22 in der Führung 36 geführt. Der Zapfen wird demnach nach hinten versetzt, da der Mitnehmerhebel entsprechend zwangsgeführt ist. Durch das Verschieben des Zapfens 22 wird der obere Abisolierschneiden-Träger 20 (in der Zeichnung) nach rechts verschoben, da der Träger 20 mit dem Mitnehmerhebel 16 einenendes verbunden ist. Das Mitnehmen erfolgt bis zum Ende der Schließbewegung durch Anschlag der beiden Schneiden 30 und 40. Das angeschnittene und umschlossene Kabelstück wird damit vom Rest des Kabels abgeführt, welches zwischen den Greifbacken 6 und 23 gehalten ist.

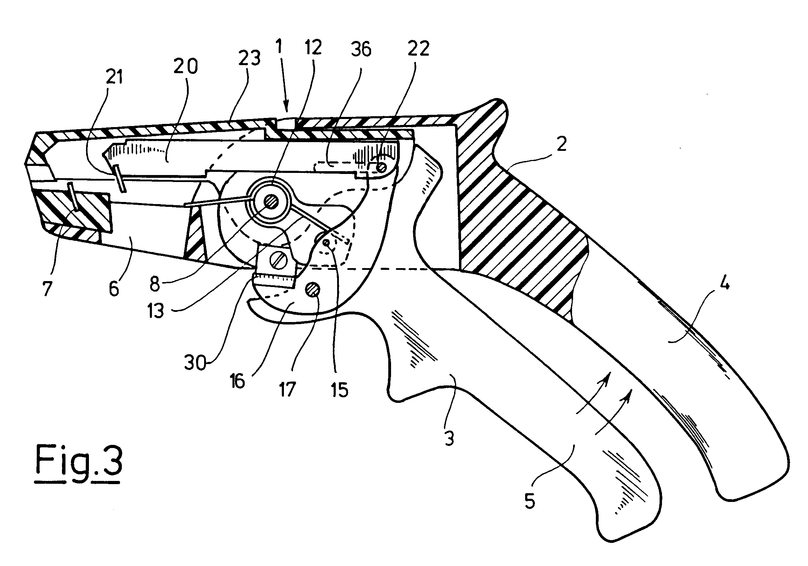

Diese Stellung ist in Figur 3 dargestellt. Der Abisolierschneiden-Träger 20 darf nun nicht in Richtung Backe 23 schnellen, sondern muß geführt nach vorne geleitet werden. Zunächst müssen dazu die Schenkel 2, 3 der Zange geöffnet werden. Bei dieser Öffnungsbewegung drückt die Feder auf den Auflagezapfen 15 und läßt den Mitnehmerhebel in Gegenuhrzeigerrichtung verdrehen. Dabei wird auch der Abisolierschneiden-Träger 20 nach vorne geschoben und gelangt in die Ausgangsposition gemäß Figur 1. Gleichzeitig unterstützt die Feder 12 das Öffnen der beiden Zangenschenkel. Wenn die beiden Zangenschenkel vollständig offen sind, ist auch der Träger 20 in der Führung 36 ganz nach vorne geschoben, so daß das Messer 21 wieder gegenüber dem Messer 7 liegt.

Dabei ist wichtig, daß der untere Drehpunkt 17 und der darüber liegende Zapfen 15 des Mitnehmerhebels derart zusammenwirken, daß eine Bewegung dieses Mitnehmerhebels erfolgt wie beschrieben. Dies geschieht dadurch, daß sich der Andrückpunkt des Federschenkels bei der Drehung des Mitnehmerhebels etwas versetzt. Sobald der Mitnehmerhebel 16 in die rechte Position gemäß Figur 1 geschwenkt ist, liegt der Zapfen 15 rechts neben dem Drehpunkt 17, so daß der Federschenkel 13 mehr nach unten drückt. Erst wenn die Backe geöffnet ist, verändert sich der Anlagepunkt des Federschenkels wieder. Die beiden Handgriffe 4, 5 können dann weiter auseinandergehen.

## Patentansprüche

1. Abisolierzange mit unterem und oberem, in einem ersten Drehpunkt (8) verbundenen Zangenschenkeln (2, 3), die einenendes jeweils in einen Griff auslaufen,
- wobei einer der Zangenschenkel (2) anderenendes in eine starr mit dem betreffenden Griff verbundene Greiferbacke übergeht,
- mit einer weiteren Greiferbacke, die Teil des anderen Zangenschenkels (3) ist,
- mit Abisolierschneiden-Trägern, die den Greiferbacken zugeordnet sind, von denen eine mit wenigstens einem Teil der Greiferbacke gegenüber der anderen Abisolierschneide verschiebbar ist,
- sowie mit einer um den ersten Drehpunkt gelagerten, die Griffe auseinanderdrehenden, zweiarmigen Spreizfeder,
wobei der untere Zangenschenkel (3) in einem zweiten, gegenüber dem ersten Drehpunkt (8) versetzten Drehpunkt (17) einen Mitnehmerhebel (16) trägt, der mit einer Auflage (15) für den einen Arm (13) der Spreizfeder (12) und mit einem Gelenk (22) versehen ist, das im Bereich des oberen Zangenschenkels angeordnet ist,
und wobei ein gegenüber der oberen Greiferbacke beweglicher, oberer Abisolierschneiden-Träger (20) mit seinem inneren Ende mit dem Gelenk (22) des Mitnehmerhebels verbunden ist.

2. Abisolierzange nach Anspruch 1, dadurch gekennzeichnet, daß das Gelenk (22) des Mitnehmerhebels (16) sich in einem Führungszapfen (22) verkörpert,
und daß ein sich gegenüber dem unteren Zangenschenkel (3) verdrehbares Greiferbacken-Element (23) vorhanden ist, das mit einer Führung (36) versehen ist, in der der Führungszapten (22) mit dem Abisolierschneiden-Träger (20) geführt ist.

3. Abisolierzange nach Anspruch 2, dadurch gekennzeichnet, daß der Abisolierschneiden-Träger (20) einen Anschlag-Längensteller (50) verschiebbar trägt.

4. Abisolierzange nach Anspruch 1 bis 3, dadurch gekennzeichnet, daß ein Teil des Mitnehmerhebels (16) als Schneide (30) ausgeführt ist, die mit einer an einem der Zangenschenkel angebrachten Gegenschneide (40) kooperiert.

5. Abisolierzange nach Anspruch 1 bis 4, dadurch gekennzeichnet, daß die Auflage (15) des Mitnehmerhebels (16) für den Spreizfeder-Arm (13) außerhalb einer Verbindungslinie (L) zwischen dem ersten und zweiten Drehpunkt (8 bzw. 17) liegt, so daß der Mitnehmerhebel (16) mit seinem Gelenk (22) in Richtung Schneiden (7, 23) ein Drehmoment erfährt.

6. Abisolierzange nach einem der vorhergehenden Ansprüche, dadurch gekennzeichnet, daß der untere Zangenschenkel (3) mit einem Anschlag (41) versehen ist, der gegen den Mitnehmerhebel (16) anschlägt und die Zangenschließbewegung begrenzt.

## Claims

1. An insulation stripper comprising top and bottom limbs (2, 3) connected at a first fulcrum (8), each such limb terminating at one end in a handle,
- wherein one of the limbs (2) merges at the other end into a gripper jaw connected to the associated handle,
- with another gripper jaw which is part of the other limb (3),
- with stripper blade carriers associated with the gripper jaws and one of which is displaceable, with at least part of the gripper jaw, relatively to the other stripper blade,
- and with a two-limbed expanding spring which is mounted around the first fulcrum and which turns the handles apart,
wherein the bottom limb (3) carries, at a second fulcrum (7) offset from the first fulcrum (8), a driver lever (16) provided with a support (15) for one arm (13) of the expanding spring (12) and with a joint (22) disposed in the region of the top limb of the stripper, and wherein a top stripper blade carrier (20) movable relatively to the top gripper jaw is connected by its inner end to the driver lever joint (22).

2. An insulation stripper according to Claim 1, characterised in that the joint (22) of the driver lever (16) is embodied in a guide pin (22),
and in that a gripper jaw element (23) which can be turned relatively to the bottom stripper limb (3) is provided and has a guide (36) in which the guide pin (22) with the stripper blade carrier (20) is guided.

3. An insulation stripper according to Claim 2, characterised in that the stripper blade carrier (20) displaceably carries a stop length adjuster (50).

4. An insulation stripper according to Claims 1 to 3, characterised in that part of the driver lever (16) is constructed as a blade (30) which co-operates with a companion blade (40) disposed on one of the stripper limbs.

5. An insulation stripper according to Claims 1 to 4,, characterised in that the support (15) of the driver lever (16) for the expanding spring arm (13) is situated outside a connecting line (L) between the first and second fulcrum (8; 17) so that the driver lever (16) with its joint (22) experiences a torque in the direction of the blades (7, 23).

6. An insulation stripper according to any one of the preceding claims, characterised in that the bottom limb (3) is provided with a stop (41) which abuts the driver lever (16) and limits the closing movement of the stripper.

## Revendications

1. Pince à dénuder incluant des branches inférieure et supérieure (2, 3) de pince reliées en un point de rotation (8) qui se terminent chacune à une extrémité en une poignée,
- l'une des branches (2) de pince se raccordant à l'autre extrémité dans une mâchoire de griffe reliée de façon rigide à la poignée concernée,
- incluant une autre mâchoire de griffe qui fait partie de l'autre branche (3) de pince,
- incluant des supports de tranchants de dénudation, qui sont associés aux mâchoires de griffes, parmi lesquels l'un peut être décalé avec au moins une partie de la mâchoire de griffe par rapport à l'autre tranchant de dénudation,
et incluant aussi un ressort d'écartement à deux branches, qui est logé autour du premier point de rotation et écarte par rotation les griffes l'une de l'autre,
la branche inférieure (3) de pince portant, à un deuxième point de rotation (17) décalé par rapport au premier point de rotation (8), un levier d'entraîneur (16) qui est pourvu d'un support (15) pour la première branche (13) de ressort d'écartement (13) et d'une articulation (22) qui est disposée dans la zone de la branche supérieure de pince,
et un support supérieur (20) de tranchant de dénudation, mobile par rapport à la mâchoire de griffe supérieure, étant relié par son extrémité intérieure à l'articulation (22) du levier d'entraîneur.

2. Pince à dénuder selon la revendication 1, caractérisé en ce que l'articulation (22) du levier d'entraîneur (16) est matérialisée d'un tenon de guidage (22),
et en ce qu'il existe un élément (23) de mâchoire de griffe, susceptible de tourner par rapport à la branche de pince inférieure (3), qui est pourvu d'un guidage (36) dans lequel le tenon de guidage (22) est guidé avec le support (20) de taillant de dénudation.

3. Pince à dénuder selon la revendication 2, caractérisée en ce que le support (20) de taillant de dénudation porte de façon mobile un positionneur longitudinal (50) de butée.

4. Pince à dénuder selon l'une des revendications 1 à 3 caractérisée en ce qu'une partie du levier d'entraîneur (16) est réalisée sous forme de taillant (30) qui coopère avec un contre-taillant (40) monté sur l'une des branches de pince.

5. Pince à dénuder selon l'une des revendications 1 à 4, caractérisée en ce que le support (15) du levier d'entraîneur (16) de la branche (13) de ressort d'écartement est situé en dehors d'une ligne de liaison (L) entre le premier et le deuxième points de rotation (8 et 17), de sorte que le levier d'entraîneur (16) exerce par son articulation (22) un couple de rotation dans la direction des taillants (7, 23).

6. Pince à dénuder selon l'une des revendications précédentes, caractérisée en ce que la branche inférieure de pince (3) est pourvue d'une butée (41) qui vient en butée contre le levier d'entraîneur (16) et limite le mouvement de fermeture de la pince.
